# EUROPÄISCHE PATENTANMELDUNG

(11) **EP 2 482 422 A1**
(43) Veröffentlichungstag der Anmeldung: **01.08.2012**
(21) Anmeldenummer: 11010302.5
(22) Anmeldetag: 30.12.2011
(51) Int. Cl.: H02J 7/00

(54) **Vorrichtung und Verfahren zum Überwachen und Symmetrieren eines mehrzelligen Energiespeicherstapels**

(30) Priorität: 26.01.2011 DE 102011009474
(71) Anmelder: Liebherr-Elektronik GmbH, 88131 Lindau (Bodensee) (DE)
(72) Erfinder: Mahdavi Tabatabaei, Nejat, Dr.-Ing., 88131 Lindau (DE); Kipp, Michael, 88138 Sigmarszell (DE); Mashaly, Aly, M. Sc.-Ing., 52076 Aachen (DE); Riedisser, Erich, Dipl.-Ing. (FH), 88138 Sigmarszell (DE)
(74) Vertreter: Laufhütte, Dieter

(57) **Zusammenfassung**

Die Erfindung betrifft eine Vorrichtung zum Überwachen und Symmetrieren der Zellenspannungen von mindestens zwei in Reihe geschalteten elektrischen Energiespeicherzellen eines mehrzelligen Energiespeicherstapels mit wenigstens einem Energiespeicherungsmittel, einer Spannungsmesseinheit, einem ersten Schaltnetz, das mit jeder Energiespeicherzelle und der Spannungsmesseinheit in Verbindung steht, einem zweiten Schaltnetz, das mit dem Energiespeicherungsmittel, der Spannungsmesseinheit und dem ersten Schaltnetz in Verbindung steht und einer Steuerungseinheit, die mit der Spannungsmesseinheit in Verbindung steht und das erste und zweite Schaltnetze steuert.

## Beschreibung

Die Erfindung betrifft eine Vorrichtung und ein Verfahren zum Überwachen und Symmetrieren der in Reihe geschalteten elektrischen Energiespeicherzellen eines mehrzelligen Energiespeicherstapels.

Elektrische Energiespeicher werden zur Speicherung und Bereitstellung elektrischer Energie in vielen Anwendungsbereichen, wie z. B. in Kraftfahrzeugen, in Schienenfahrzeugen, bei Kranen oder bei dezentralen Stromversorgungssystemen eingesetzt. Die Energiespeicher besitzen wenigstens eine Energiespeicherzelle, die oftmals auf einem elektrochemischen oder rein elektrischen Speicherkonzept basiert. Zur Erhöhung der durch die Speicherzelle bereitgestellten elektrischen Spannung bzw. der zur Verfügung stehenden Speicherkapazität werden mehrere Energiespeicherzellen in Reihe geschaltet.

Zum Beispiel bilden mehrere in Reihe geschaltete Doppelschichtkondensatoren einen Energiespeicherstapel, um eine höhere Ausgangsspannung bereitstellen zu können, da die verfügbare maximale Ausgangsspannung eines einzelnen Doppelschichtkondensators üblicherweise auf einen geringen Spannungsbereiche zwischen 2,5 V - 2,7 V begrenzt ist. Benötigt eine Anwendung eine Nennspannung von 100 V, werden 40 Zellen zu je 2,5 V zu einem Kondensatorstapel zusammengefaßt.

Aufgrund der hohen Herstellungstoleranzen haben die Speicherzellen unterschiedliche Kapazitäten und innere Reihenwiderstände sowie abweichende Selbstentladungscharakteristika. Dies führt in einem Kondensatorstapel zu ungleichmäßigen Zellenspannungen, was bei Zellen mit niedriger Kapazität zu Überspannung und bei Zellen mit höherer Kapazität zu Umpolung führen kann. Die unterschiedlichen Zellenspannungen verursachen darüber hinaus eine ungleichmäßige Alterung der einzelnen Zellen. Als Präventivmaßnahmen wird folglich ein Prozeß zum Spannungsausgleich zwischen den Zellen angestrebt.

Die vorstehend beschriebene Problematik tritt prinzipiell bei sämtlichen Energiespeicherstapeln auf, unabhängig von dem verwendeten Speicherprinzip der einzelnen Zellen, wie z. B. elektrochemische oder rein elektrische Speicherkonzepte.

Aus dem Stand der Technik sind bisher Vorrichtungen und Verfahren zur Symmetrierung der Zellenspannungen bekannt, die neben trivialen passiven Symmetrierverfahren wie parallel geschaltete Symmetrierwiderstände oder Zener-Dioden auch einen Ladungstranferkondensator vorschlagen, der eine Ladungsübertragung zwischen zwei Zellen mit abweichender Zellenspannung ermöglicht.

Die Aufgabe der vorliegenden Erfindung besteht darin, die aus dem Stand der Technik bekannten Vorrichtungen weiterzuentwickeln, um eine vereinfachte und effektivere Überwachungs- und Spannungssymmetrierungsmöglichkeit der Zellenspannungen zu gewährleisten.

Diese Aufgabe wird durch eine Vorrichtung gemäß den Merkmalen des Anspruchs 1 gelöst. Vorteilhafte Ausgestaltungen der Erfindung sind Gegenstand der abhängigen Unteransprüche 2 bis 9.

Zur Überwachung der Zellenspannung der mindestens zwei in Reihe geschalteten elektrischen Energiespeicherzellen ist eine Spannungsmesseinheit vorgesehen, die mittelbar über ein erstes Schaltnetz mit jeder Energiespeicherzelle elektrisch leitend verbindbar ist. Ferner ist ein Energiespeicherungsmittel vorgesehen, das als Energietransfermedium zwischen wenigstens zwei in Reihe geschalteten elektrischen Energiespeicherzellen agiert. Über ein zweites Schaltnetz ist das Energiespeicherungsmittel mittelbar über das erste Schaltnetz mit jeder Energiespeicherzelle des mehrzelligen Energiespeicherstapels elektrisch leitend verbindbar. Ferner ist eine Steuerungseinheit vorgesehen, die mit der Spannungsmesseinheit in Verbindung steht und unter Berücksichtigung der von der Spannungsmesseinheit übermittelten Werte das erste und zweite Schaltnetz steuert.

In einer bevorzugten Ausführungsform ist die Spannungsmesseinheit über das erste Schaltnetz selektiv mit jeder einzelnen Energiespeicherzelle des Energiespeicherstapels zur Spannungsüberwachung und/oder Spannungsmessung parallel schaltbar. Folglich ist lediglich eine einzige Spannungsmesseinheit ausreichend, um eine Spannungsüberwachung bzw. Spannungsmessung für jede einzelne Energiespeicherzelle des Energiespeicherstapels umzusetzen.

Weiterhin ist das Energiespeichermittel bevorzugt durch das erste und zweite Schaltnetz selektiv zu jeder Energiespeicherzelle parallel schaltbar. Das Energiespeichermittel fungiert folglich als Energietransfermittel, das eine Teilmenge der elektrischen Ladung von einer beliebigen Zelle zu einer anderen beliebigen Zelle ein- oder mehrmals überträgt.

Als besonders vorteilhaft erweist sich als Energiespeicherungsmittel ein Ladungstransferkondensator, insbesondere ein Doppelschichtkondensator. Wird der Ladungstransferkondensator parallel zu einer Energiespeicherzelle geschaltet, so bewirkt eine vorliegende Potentialdifferenz zwischen Ladungstransferkondensator und Energiespeicherzelle einen Auf- oder Entladevorgang des Ladungstransferkondensators. Eine Parallelschaltung des Ladungstransferkondensators mit einer Energiespeicherzelle höheren Potentials bewirkt ein Entladen der Zelle zu Gunsten des Ladungstransferkondensators, bis ein Potentialausgleich zwischen den parallel verschalteten Komponenten besteht. Eine Parallelschaltung des Ladungstransferkondensators mit einer Energiespeicherzelle geringeren Potentials bewirkt ein Entladen des Ladungstransferkondensators zu Gunsten der Speicherzelle, bis ein Potentialausgleich zwischen den parallel verschalteten Komponenten besteht.

Vorzugsweise sind beide Schaltnetze unabhängig voneinander durch die Steuerungseinheit steuerbar. Die Topologie des ersten und zweiten Schaltnetzes ist so entwickelt, dass die Parallelschaltung des Ladungstransferkondensators an jede beliebige Zelle selektiv möglich ist.

Die Ausführung der einzelnen Schaltelemente des ersten und/oder zweiten Schaltnetzes ist grundsätzlich beliebig wählbar. Elektromechanische Relais sind zwar verlustarm und fast ohne Spannungsabfall, besitzen jedoch eine zu niedrige Lebensdauer. Bipolartransistoren und IGBTs verursachen einen nachteiligen hohen Spannungsabfall in der Schaltung. Die vorliegende Erfindung verwendet bevorzugt Halbleiterschalter als Schaltelemente innerhalb des ersten und/oder zweiten Schaltnetzes. Die eingesetzten Halbleiterschalter verursachen nur einen äußerst geringen Spannungsabfall in der Schaltung und sind darüber hinaus besonders verlustarm.

In einer besonders vorteilhaften Ausführung sind als Halbleiterschaltelemente MOSFET-Schalter verwendet. Unter Umständen schließt die parallelgeschaltete, im MOSFET integrierte Diode alle Zellen des Energiespeicherstapels kurz. Aus diesem Grund umfasst wenigstens ein Schaltelement des ersten und/oder zweiten Schaltnetzes eine antiserielle Beschaltung von zwei MOSFET-Schaltern.

Durch die Parallelschaltung der Spannungsmesseinheit mit wenigstens einer beliebigen Energiespeicherzelle können unvorteilhafte, störende Common-Mode-Spannungen hervorgerufen werden, die zu einer Verfälschung des Messergebnisses führen. Zweckmäßig umfasst die Spannungsmesseinheit daher wenigstens einen Messkondensator und mindestens zwei Schaltelemente zur selektiven Entkopplung der Spannungsmesseinheit von der zu messenden Energiespeicherzelle. Der Messkondensator ist am Eingang der Spannungsmesseinheit angeschlossen und wird während der Messphase mittelbar über das erste Schaltnetz auf die anliegende Zellenspannung der zu vermessenden Energiespeicherzelle aufgeladen, während der integrierte Messverstärker über die mindestens zwei Schaltelemente der Spannungsmesseinheit entkoppelt ist. Sobald der Messkondensator die Zellenspannung trägt, wird die Verbindung zum Messverstärker über die Schaltelemente geschlossen.

In einer möglichen Ausführung der vorliegenden Erfindung ist wenigstens eine Energiespeicherzelle des Energiespeicherstapels ein elektrochemischer Akkumulator oder ein Kondensator, insbesondere ein Doppelschicht-Kondensator. Die einzelnen Energiespeicherzellen können gleichartig oder unterschiedlich sein. Vorteilhafterweise wird das Energiespeichermittel gleichartig gewählt. Vorzugsweise entspricht die Kapazität des Energiespeichermittels nahezu der Kapazitätstoleranz der verwendeten Einzelzellen. Dies ermöglicht einen effektiven und schnellen Ladungstransfer zwischen den Energiespeicherzellen.

Es kann vorgesehen sein, dass die Steuerungseinheit wenigstens einen Datenspeicher zur Speicherung ein oder mehrerer erfaßter Spannungsmesswerte der Spannungsmesseinheit aufweist. Für die Beurteilung der erfaßten Spannungsmesswerte kann es zweckmäßig sein, dass zusätzlich ein oder mehrere Referenzspannungswerte im Datenspeicher hinterlegt sind. Möglich ist auch die Speicherung ein oder mehrerer Spannungstoleranzwerte, die einen zulässigen Abweichungskorridor für die erfaßten Spannungsmesswerte definieren.

Zur Einbindung bzw. Anbindung der erfindungsgemäßen Vorrichtung an ein nebengeordnetes bzw. übergeordnetes System umfasst die Steuerungseinheit wenigstens eine Datenschnittstelle für die Datenkommunikation. Die Datenschnittstelle dient zum Austausch der erfaßten Spannungsmesswerte bzw. weitergehender Analysewerte bzw. steuerungsrelevanter Daten. Die Datenschnittstelle dient insbesondere zur Anbindung der Vorrichtung an einen vorhandenen Systemdatenbus.

Die vorliegende Erfindung betrifft des weiteren ein Verfahren zur Überwachung und Symmetrierung der Zellenspannungen von mindestens zwei in Reihe geschalteten elektrischen Energiespeicherzellen eines mehrzelligen Energiespeicherstapels, wobei das erfindungsgemäße Verfahren auf einer Vorrichtung gemäß einer der voranstehend erläuterten Ausführungsvarianten der erfindungsgemäßen Vorrichtung ausgeführt wird. Das Verfahren weist offensichtlich dieselben vorteilhaften Eigenschaften wie die erfindungsgemäße Vorrichtung auf.

Das vorgestellte Verfahren betrifft die Ansteuerung des ersten und zweiten Schaltnetzes durch die vorgesehene Steuerungseinheit, um ein selektives Messen der einzelnen Zellenspannungen zu gewährleisten und um in Abhängigkeit der erfaßten Messwerte eine Spannungssymmetrierung zwischen zwei oder mehreren Energiezellen auszuführen.

Vorzugsweise steuert die Steuerungseinheit das erste und zweite Schaltnetz an, um alle Zellenspannungen des Energiespeicherstapels selektiv oder in einer bestimmten Reihenfolge durch die Spannungsmessvorrichtung durchzumessen bzw. zu überwachen.

Insbesondere erfolgt innerhalb der Steuerungseinheit eine Auswertung der erfaßten Spannungsmesswerte zur Bestimmung der Spannungsabweichung des oder der ersten Spannungsmesswerte von einer oder mehreren hinterlegten Referenzspannungen. Eine Abweichung der Spannungsmesswerte von einer oder mehreren Referenzspannungen signalisiert einen kritischen Betriebszustand des Energiespeicherstapels.

Ein Vorteil des erfindungsgemäßen Verfahrens besteht darin, dass die Steuerungseinheit vorab die Energiespeicherzellen des Energiespeicherstapels mit minimaler und maximaler Zellenspannung bestimmt. Die Energiespeicherzellen werden unter Verwendung des Energiespeichermittels symmetriert, bis die Spannungsdifferenz der beiden gemessenen Zellenspannungen einen vorbestimmten Referenzwert unterschreitet. Vorzugsweise wird dieser Verfahrensschritt rekursiv ausgeführt, bis die maximal auftretende Zellenspannungsdifferenz zwischen zwei beliebigen Energiespeicherzellen einen vorbestimmten Referenzwert unterschreitet.

Ein weiterer Vorteil des erfindungsgemäßen Verfahrens besteht darin, dass die Steuerungseinheit anhand des oder der erfaßten Spannungsmesswerte den Ladeenergiezustand jeder Energiespeicherzelle und folglich den Ladezustand des gesamten Energiespeicherstapels ermitteln.

Möglich ist es auch, dass die Steuerungseinheit anhand der erfaßten Spannungsmesswerte einen Rückschluß auf den relativen Alterungszustand zumindest einer Energiespeicherzelle bietet.

Die vorliegende Erfindung betrifft weiterhin die Verwendung einer derartigen erfindungsgemäßen Vorrichtung bzw. des erfindungsgemäßen Verfahrens in einer Maschine mit einem mehrzelligen Energiespeicherstapel, wie z. B. in hybriden Fahrzeugen, in Schienenfahrzeugen, Containerkranen sowie bei Hybridbaggern.

Weitere Vorteile und Einzelheiten der Erfindung werden anhand des in den Zeichnungen näher dargestellten Ausführungsbeispiels erläutert. Es zeigen:
- Figur 1:: eine skizzierte Prinzipdarstellung der erfindungsgemäßen Vorrichtung,
- Figur 2:: eine Schaltbilddarstellung der erfindungsgemäßen Vorrichtung,
- Figur 3:: eine Schaltbilddarstellung einer möglichen Ausführungsform der erfindungsgemäßen Spannungsmesseinheit,
- Figur 4:: eine Schaltbilddarstellung eines Schaltelements des ersten oder zweiten Schaltnetzes und
- Figur 5:: ein Flußdiagramm des erfindungsgemäßen Verfahrens zur Überwachung und Symmetrierung eines Energiespeicherstapels.

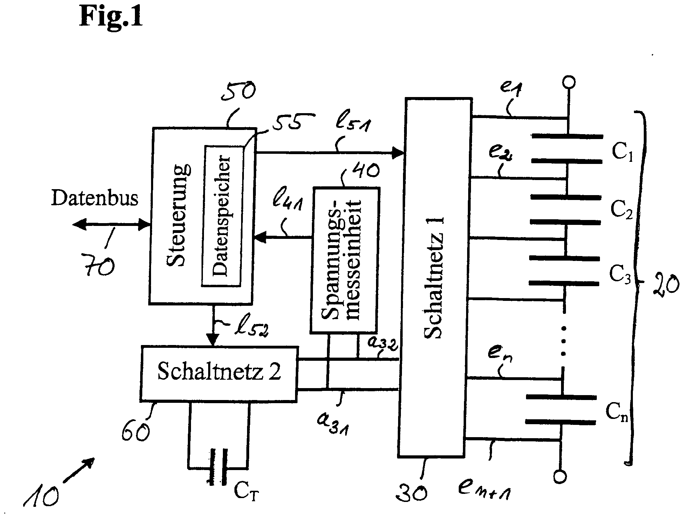

Die Prinzipskizze der Figur 1 zeigt die erfindungsgemäße Vorrichtung 10 zum Überwachen und Spannungssymmetrieren der Zellenspannungen von mindestens zwei in Reihe geschalteten elektrischen Energiespeicherzellen des mehrzelligen Energiespeicherstapels 20. Der Energiespeicherstapel 20 besteht aus n Doppelschichtkondensatoren Cₓ, die zur Erhöhung des Energiegehalts bzw. der Ausgangsspannung des Energiespeicherstapels 20 in Reihe geschaltet sind. Das Schaltnetz 30 steht über die Anschlußleitungen e₁...eₙ₊₁ eingangsseitig mit jeder Anschlußelektrode der Doppelschichtkondensatoren C₁...Cₙ in Verbindung. Die beiden Ausgangsleitungen a₃₁, a₃₂ stehen mit dem Eingang der Spannungsmesseinheit 40 sowie dem Eingang des Schaltnetzes 60 in Verbindung.

Die Topologie des Schaltnetzes 30 ist dabei so entwickelt, dass eine Parallelschaltung der Spannungsmesseinheit 40 sowie des Schaltnetzes 60 an jede beliebige Zelle, das heißt an jeden beliebigen Doppelschichtkondensator C₁...Cₙ selektiv möglich ist.

An das Schaltnetz 60 ist ein Ladungstransferkondensator C_{T} gekoppelt. Die Kombination der Schaltnetze 30, 60 ist nun derart ausgelegt, so dass eine Parallelschaltung des Ladungstransferkondensators C_{T} zu jeder beliebigen Zelle C₁...Cₙ selektiv möglich ist.

Zur Steuerung der Vorrichtung 10 dient die Steuerungseinheit 50, die über die beiden Signalleitungen I₅₁, I₅₂ die beiden Schaltnetze 30, 60 unabhängig voneinander ansteuern kann. Zur Überwachung des Energiespeicherstapels 20 führt eine Signalleitung I₄₁ von der Spannungsmesseinheit 40 zur Steuerungseinheit 50, um die erfaßten Spannungsmesswerte der einzelnen Zellen C₁...Cₙ sowie des Ladungstransferkondensators C_{T} zu übermitteln. Auf Grundlage der erhaltenen Spannungsmesswerte erzeugt die Steuerungseinheit 50 die entsprechenden Steuerbefehle, die über die Steuerleitungen I₅₁, I₅₂ den Schaltnetzen 30, 60 übertragen werden.

Für eine zeitverzögerte Analyse und Auswertung der Spannungsmesswerte weist die Steuerungseinheit 50 den integrierten Datenspeicher 55 auf, in dem unter anderem die über die Signalleitung I₅₁ erhaltenen Spannungsmesswerte ablegbar sind. Ferner können für die ausführliche Analyse und Bewertung der Spannungsmesswerte definierte Referenzspannungswerte bzw. Toleranzgrenzen hinterlegt sein.

Zur Anbindung an ein nebengeordnetes oder übergeordnetes System umfasst die Steuerungseinheit 50 eine Datenschnittstelle mit der sich die Vorrichtung 10 an einen Datenbus 70 koppeln lässt. Die Datenschnittstelle dient beispielsweise zur Übertragung der empfangenen Spannungsmesswerte bzw. der generierten Analysedaten.

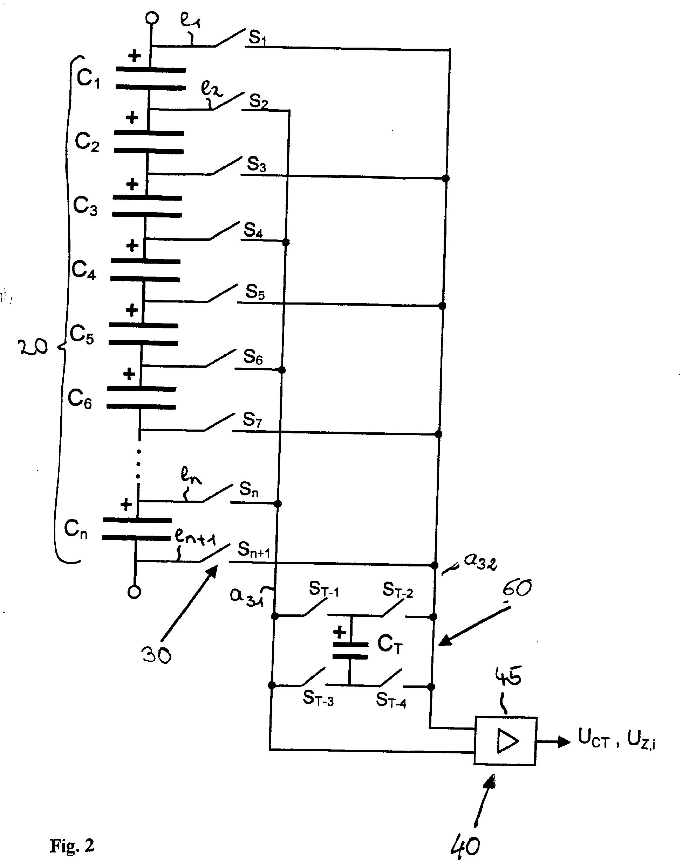

Figur 2 zeigt eine detaillierte Schaltbilddarstellung der erfindungsgemäßen Vorrichtung 10 ohne die Steuerungseinheit 50. Das Schaltnetz 30 umfasst die Schaltelemente S₁...Sₙ₊₁, die die Eingangsleitungen e₁...eₙ₊₁ des Schaltnetzes 30 selektiv auf die zweipoligen Ausgangsleitungen a₃₁, a₃₂ durchschalten.

Die Ausgangsleitungen a₃₁, a₃₂ führen zum Eingang des Messverstärkers 45 der Spannungsmesseinheit 40. Ferner ist das Schaltnetz 60 an die Ausgangsleitungen a₃₁, a₃₂ gekoppelt. Das Schaltnetz 60 besteht im wesentlichen aus einer Gruppe von vier Schaltelementen S_{T-1} ... S_{T-4}. Eine entsprechende Betätigung der vier Schaltelemente S_{T-1}...S_{T-4} in Kombination mit den Schaltelementen des Schaltnetzes 30 bewirkt eine selektive Parallelverschaltung des Ladungstransferkondensator C_{T} zu einem der Doppelschichtkondensatoren C₁...Cₙ des Energiespeicherstapels 20.

Das chronologische Durchmessen der einzelnen Zellenspannungen, d.h. die Betätigung der Schaltelemente S₁ - Sₙ₊₁, erfolgt nach einem vorgeschriebenen Schema. Für die Bestimmung der Zellenspannung des Doppelschichtkondensators C₁ werden ausschließlich die Schaltelemente S₁ und S₂ geschlossen, um den Messverstärker 45 mit dem Doppelschichtkondensator C₁ parallel zu verschalten. Am Ausgang des Messverstärkers liegt die erfaßte Zellenspannung U_{Z,1} an. Die Zellenspannung U_{Z,2} des Doppelschichtkondensator C₂ wird durch Betätigung der Schaltelemente S₂ und S₃ bestimmt.

Die Spannungssymmetrierung zwischen wenigstens zwei Doppelschichtkondensatoren des Energiespeicherstapels 20 erfolgt über die kombinierte Ansteuerung der Schaltnetze 30, 60. Für eine Spannungsymmetrierung zwischen den Doppelschichtkondensatoren C₁ und C₆ werden zunächst die beiden Schaltelemente S₁, S₂ des Schaltnetzes 30 und dann die beiden Schaltelemente S_{T-1}, S_{T-4} des Schaltnetzes 60 gleichzeitig betätigt um den Ladungstransferkondensator C_{T} parallel zum C₁ zu schalten. Der Ladungstransferkondensator C_{T} wird durch den Ladungsüberschuß des Kondensators C₁ geladen, bis an beiden Komponenten derselbe Spannungsabfall vorliegt. Nach dem Öffnen der Schaltelemente S₁, S₂ wird der Ladungstransferkondensator durch Betätigung der Schaltelemente S₆, S₇ und die beiden Schaltelemente S_{T-2}, S_{T-3} parallel zum Kondensator C₆ mit geringerem Ladungspotential geschaltet, der durch das vergleichsweise hohe Potential des Ladungstransferkondensator C_{T} geladen wird, bis zwischen beiden Komponenten ein Potentialgleichgewicht vorliegt. Die Potentialdifferenz zwischen den Kondensatoren C₁, C₆ wird folglich verringert.

Weiterhin besteht die Möglichkeit, den Ladungszustand des Ladungstransferkondensators C_{T} zu bestimmen. In diesem Fall verbleiben alle Schaltelemente des Schaltnetzes 30 geöffnet und nur die Schaltelemente S_{T-1}, S_{T-4} bzw. S_{T-2}, S_{T-3} werden geschlossen, um den Ladungstransferkondensator parallel zum Messverstärker 45 der Spannungsmesseinheit 40 zu schalten. Am Ausgang der Spannungsmesseinheit 40 liegt die verstärkte Ausgangsspannung U_{CT} des Ladungstransferkondensators C_{T} an.

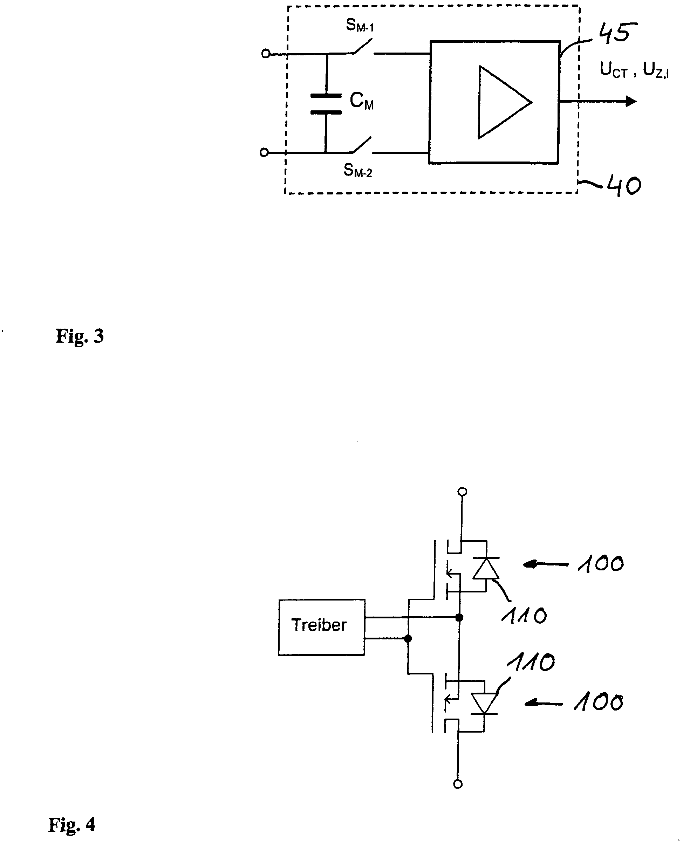

Eine vorteilhafte Ausführungsform der Spannungsmesseinheit 40 ist der Figur 3 zu entnehmen. Um den Einfluß von störenden Common-Mode-Spannungen auf das Messresultat zu begrenzen, soll der Messverstärker 45 von der Messanordnung entkoppelt werden. Am Eingang der Spannungsmesseinheit 40 ist ein geschalteter Messkondensator C_{M} angeschlossen, der während der Messphase durch die entsprechende Schaltkonstellation des Schaltnetzes 30 parallel zu einer beliebigen Speicherzelle C₁...Cₙ geschaltet wird. Während der Messkondensator C_{M} auf die anliegende Zellenspannung aufgeladen, verbleiben die Schalter S_{M-1}, S_{M-2} geöffnet, um den Einfluß des Messverstärkers 45 zu unterbinden. Dann wird der Messkondensator C_{M} durch Betätigung der entsprechenden Schaltelemente des Schaltnetzes 30 von der jeweiligen Speicherzelle Cₓ entkoppelt und anschließend durch Betätigung der Schalter S_{M-1}, S_{M-2} mit dem Messverstärker 45 gekoppelt, um die im Messkondensator C_{M} gespeicherte Zellenspannung zu erfassen.

Figur 4 zeigt ein Schaltbild der konkreten Realisierung eines Schaltelementes der Schaltnetze 30, 60. In der Ausführung der erfindungsgemäßen Vorrichtung werden Halbleiterschalter eingesetzt, welche einen sehr niedrigen Spannungsabfall in der Schaltung verursachen und weiterhin verlustarm sind. Geeignete Halbleiterschaltelemente für diese Anwendungen sind MOSFET-Schalter. Um zu verhindern, dass die parallel geschaltete integrierte Diode 110 einen Kurzschluß bildet und folglich alle Speicherzellen C₁ - Cₙ des Energiespeicherstapels 10 kurzschließt, werden jeweils zwei MOSFET-Schalter 100 in einer antiseriellen Beschaltung angeordnet, um ein Schaltelement S₁...Sₙ₊₁, S_{T-1}...S_{T-4} zu verwirklichen.

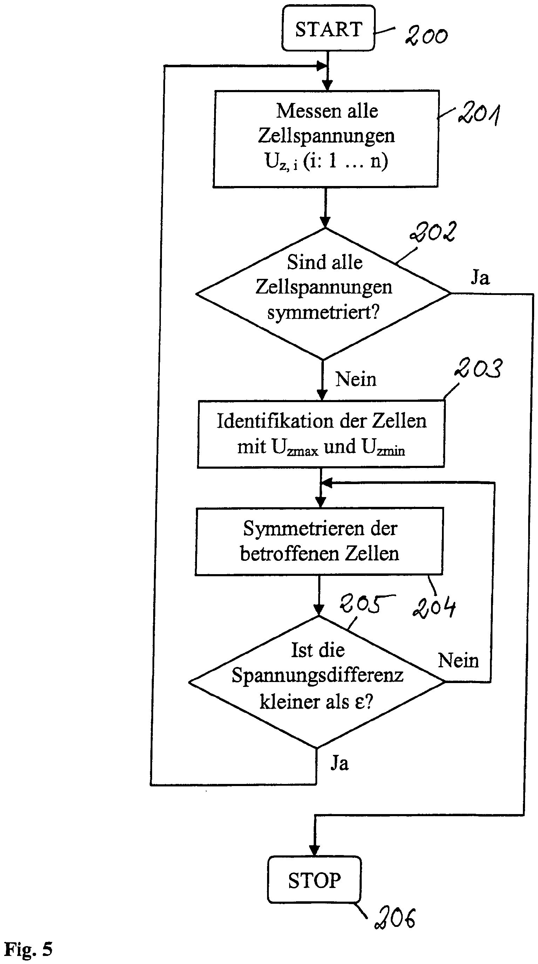

Figur 5 zeigt ein Flußdiagramm, das den Ablauf des erfindungsgemäßen Verfahrens zur Überwachung und Spannungssymmetrierung eines Energiespeicherstapels 10 charakterisiert. Beginnend im Ausgangszustand Start 200 werden im Zustand 201 alle Zellenspannungen U_{Z,i} (i: 1 - n) der Doppelschichtkondensatoren C₁...Cₙ bestimmt. Die Messung der einzelnen Zellenspannungen kann entweder selektiv oder nach einer vordefinierten Reihenfolge erfolgen.

Im Anschluß wird von der Steuerungseinheit 50 festgestellt, ob alle Zellenspannungen U_{Z,i} symmetriert sind. Zur Feststellung wird beispielsweise die Differenzspannung zwischen jeweils zwei Spannungsmesswerten von zwei Energiespeicherzellen C₁...Cₙ bestimmt und deren Abweichung von einem zulässigen Toleranzwert ermittelt. Gleichfalls besteht auch die Möglichkeit, die einzelnen gemessenen Zellenspannungen U_{Z,i} gegen hinterlegte Referenzspannungen zu vergleichen, um bei einer unzulässigen Abweichung eine Symmetrierung auszulösen.

Liegen alle Zellenspannungen auf etwa konstantem Niveau, wechselt das Flußdiagramm in den Zustand Stop 206. Im Falle einer unzulässigen Abweichung ein oder mehrerer Zellenspannungen erfolgt über die Verzweigung 202 ein Übergang in den Zustand 203, der einen Spannungssymmetriervorgang auslöst.

Im Zustand 203 werden aus den ermittelten Zellenspannungen U_{Z,i} die entsprechenden Doppelschichtkondensatoren C₁...Cₙ mit der maximalen und der minimalen Zellenspannung U_{Zmax}, U_{Zmin} identifiziert.

Die ermittelten Zellen werden im Zustand 204 durch entsprechende Ansteuerung der Schaltnetze 30, 60 symmetriert, indem der Ladungstransferkondensator C_{T} abwechselnd parallel zwischen den beiden Zellen hin und her geschaltet wird. Die Zellenspannungen der betroffenen Zellen wird nach jedem Durchgang bzw. nach einer bestimmten Anzahl von Symmetrierdurchgängen neu durch die Spannungsmesseinheit 40 erfaßt und die berechnete Spannungsdifferenz zwischen den erfaßten Messwerten gegen einen Toleranzwert verglichen. In der Verzweigung 205 springt das Zustandsdiagramm zur Auslösung eines erneuten Symmetriervorgangs in den Zustand 204, falls die ermittelte Potentialdifferenz nicht die gestellten Erfordernisse erfüllt. Unterschreitet die gemessene Spannungsdifferenz einen vordefinierten Toleranzwert, so erfolgt ein Sprung an den Beginn des Flußdiagramms, wodurch erneut alle Zellenspannungen U_{Z,i} durchgemessen werden.

Die während des Verfahrens erhaltenen Messwerte bzw. Analysedaten können für eine spätere Bearbeitung in der Datenspeichereinheit 55 der Steuerungseinheit 50 hinterlegt werden. Gleichfalls ist eine Weiterleitung der entsprechenden Daten aus dem Datenspeicher 55 an ein nebengeordnetes bzw. übergeordnetes System über die Datenschnittstelle möglich.

Das erfindungsgemäße Verfahren gewährleistet nicht nur die ordnungsgemäße Symmetrierung der einzelnen Zellen C₁...Cₙ sondern lässt auch anhand der gemessenen Zellenspannungen Rückschlüsse auf den Ladezustand jeder einzelnen Zelle bzw. auf den Ladezustand des gesamten Kondensatorstapels 20 zu. Ferner kann die Steuerungseinheit 50 anhand der erfaßten Messwerte den relativen Alterungszustand jeder einzelnen Zelle C₁...Cₙ überwachen.

Das erläuterte Ausführungsbeispiel wurde anhand eines Energiespeicherstapels 20 mit einer Vielzahl an Doppelschichtkondensatoren C₁...Cₙ erläutert. Eine Ausweitung des erfindungsgemäßen Prinzips auf Energiespeicherstapelausführungen mit elektrochemischen Akkumulatoren, beliebigen Kondensatorformen oder sonstigen Energiespeichermitteln ist ohne relevante Modifikation möglich.

Der Ladungstransferkondensator C_{T} ist in der Regel gleicher Art bzw. baugleich zu der verwendeten Bauform der Energiespeicherzellen. Im konkreten Ausführungsbeispiel ist der Ladungstransferkondensator C_{T} ebenfalls ein Doppelschichtkondensator, dessen Kapazität fast identisch zu der Kapazitätstoleranz der verwendeten Speicherzellen C₁...Cₙ ist. Dies ermöglicht einen effektiven und schnellen Ladungstransfer zwischen den Zellen C₁...Cₙ.

## Patentansprüche

1. Vorrichtung zum Überwachen und Symmetrieren der Zellenspannungen von mindestens zwei in Reihe geschalteten elektrischen Energiespeicherzellen eines mehrzelligen Energiespeicherstapels mit
- wenigstens einem Energiespeicherungsmittel,
- einer Spannungsmesseinheit,
- einem ersten Schaltnetz, das mit jeder Energiespeicherzelle und der Spannungsmesseinheit in Verbindung steht,
- einem zweiten Schaltnetz, das mit dem Energiespeicherungsmittel, der Spannungsmesseinheit und dem ersten Schaltnetz in Verbindung steht und
- einer Steuerungseinheit, die mit der Spannungsmesseinheit in Verbindung steht und das erste und zweite Schaltnetze steuert.

2. Vorrichtung nach Anspruch 1, wobei jede Energiespeicherzelle durch das erste Schaltnetz selektiv mit der Spannungsmesseinheit zur Spannungsüberwachung und/oder -messung parallel schaltbar ist.

3. Vorrichtung nach einem der vorhergehenden Ansprüche, wobei das Energiespeichermittel durch das erste und zweite Schaltnetz selektiv mit jeder Energiespeicherzelle parallel schaltbar ist, um eine Teilmenge der elektrischen Ladung von einer beliebigen Zelle zu einer anderen beliebigen Zelle ein oder mehrmals zu übertragen.

4. Vorrichtung nach einem der vorhergehenden Ansprüche, wobei wenigstens ein Energiespeicherungsmittel mindestens einen Ladungstransferkondensator, insbesondere einen Doppelschichtkondensator umfasst.

5. Vorrichtung nach einem der vorhergehenden Ansprüche, wobei die beiden Schaltnetze unabhängig voneinander durch die Steuereinheit steuerbar sind.

6. Vorrichtung nach einem der vorhergehenden Ansprüche, wobei das oder die Schaltelemente des ersten und/oder zweiten Schaltnetzes jeweils mindestens zwei anti-seriell geschaltete MOSFET-Schalter umfassen.

7. Vorrichtung nach einem der vorhergehenden Ansprüche, wobei die Spannungsmesseinheit wenigstens einen Messkondensator und mindestens zwei Schaltelemente zur selektiven Entkopplung der Spannungsmesseinheit umfasst.

8. Vorrichtung nach einem der vorhergehenden Ansprüche, wobei wenigstens eine Energiespeicherzelle ein elektrochemischer Akkumulator oder ein Kondensator, insbesondere ein Doppelschicht-Kondensatoren ist.

9. Vorrichtung nach einem der vorhergehenden Ansprüche, wobei die Steuereinheit wenigstens einen Datenspeicher zur Speicherung ein oder mehrerer erfaßter Spannungsmesswerte und/oder ein oder mehrerer Referenzspannungswerte und/oder ein oder mehrerer Spannungstoleranzwerte aufweist, wobei die Steuereinheit weiterhin bevorzugt wenigstens eine Datenschnittstelle zur Datenkommunikation, insbesondere über einen Datenbus, mit anderen Geräten eines nebengeordneten und/oder übergeordneten Systems umfasst.

10. Verfahren zur Überwachung und Symmetrierung der Zellenspannungen von mindestens zwei in Reihe geschalteten elektrischen Energiespeicherzellen eines mehrzelligen Energiespeicherstapels mit einer Vorrichtung gemäß einem der Ansprüche 1 bis 9.

11. Verfahren nach Anspruch 10, wobei die Steuerungseinheit durch entsprechende Ansteuerung der Schaltnetze alle Zellenspannungen selektiv oder in einer bestimmten Reihenfolge durch die Spannungsmessvorrichtung erfaßt und in Abhängigkeit der erfaßten Spannungsmesswerte das erste und zweite Schaltnetz zur ein- oder mehrmaligen Spannungssymmetrierung zwei oder mehrerer Energiezellen entsprechend ansteuert.

12. Verfahren nach Anspruch 10 oder 11, wobei die Steuerungseinheit die Spannungsabweichung des oder der erfaßten Spannungsmesswerte von ein oder mehreren Referenzspannungen erkennt bzw. bestimmt.

13. Verfahren nach einem der Ansprüche 10 bis 12, wobei die Steuerungseinheit die Energiespeicherzellen mit minimaler und maximaler Zellenspannung bestimmt und die beiden Energiespeicherzellen ein- oder mehrmals symmetriert bis die Spannungsdifferenz der beiden Zellenspannungen einen vorbestimmten Referenzwert unterschreitet.

14. Verfahren nach einem der Ansprüche 10 bis 13, wobei die Steuerungseinheit anhand des oder der erfaßten Spannungsmesswerte den Ladezustand jeder Energiespeicherzelle und folglich den Ladezustand des gesamten Energiespeicherstapels ermittelt.

15. Verfahren nach einem der Ansprüche 10 bis 14, wobei die Steuerungseinheit anhand des oder der erfaßten Spannungsmesswerte den relativen Alterungszustand jeder Energiespeicherzelle überwacht.
